Europäisches Patentamt

European Patent Office

Office européen des brevets

(19)

(11) Publication number: **0 071 679**
**A1**

## (12) EUROPEAN PATENT APPLICATION

(21) Application number: **81303607.6**

(22) Date of filing: **06.08.81**

(51) Int. Cl.³: **C 22 B 60/02, C 22 B 21/00**

(43) Date of publication of application: **16.02.83**
**Bulletin 83/7**

(84) Designated Contracting States: **AT BE DE FR GB IT LU NL SE**

(71) Applicant: **GENERAL MINING UNION CORPORATION LIMITED, 6 Hollard Street, Johannesburg Transvaal Province (ZA)**

(72) Inventor: **Livesey-Goldblatt, Eric, 7 Zircon Street Heiderkruin Ext 1, Roodepoort Transvaal Province (ZA)**
Inventor: **Nagy, Imre Ferenc, 104 Second Street Linden, Johannesburg Transvaal Province (ZA)**
Inventor: **Tunley, Trevor Hugh, 100, Paul Kruger Drive Monument, Krugersdorp Transvaal Province (ZA)**

(74) Representative: **Spall, Christopher John et al, BARKER, BRETTELL & DUNCAN 138 Hagley Road, Edgbaston Birmingham B16 9PW (GB)**

(54) Production of aluminium and uranium products.

(57) A process for recovering uranium and/or aluminium from a refractory silico-aluminous material is disclosed. The silico-aluminous material is leached in one or more stages (12, 20) to give a pregnant solution which contains little or no acid that would inhibit the recovery of the uranium and/or aluminium from the leach solution. Generally the pH will be in the range of about 1,5 to 2 so that the maximum of free acid will be about 5 grams per liter. The desired materials are recovered from the leach solution.

1

# PRODUCTION OF ALUMINIUM AND URANIUM PRODUCTS

THIS INVENTION relates to the production of aluminium and uranium products from silico-aluminous materials.

Uranium bearing silico-aluminous materials such as clay, shale and ash from the roasting of coal are refractory materials. They require severe treatment to extract the aluminium, uranium and any other valuable metals that may be present.

Procedures that have been proposed are to leach these materials with a high concentration of sulphuric, hydrochloric or nitric acid. However, to ensure maximum extraction of the metals, (i.e. about 90%), it has generally been found necessary for the acid concentration at the termination of the leach to be very high. This effect, using sulphuric acid as a leach reagent, is illustrated in Table I. In other words, the amount of acid added to the material has to be well in excess of that which will be consumed by the silico-aluminous material. The resultant highly acidified slurry also contains a high concentration of dissolved salts and generally presents considerable crystallization difficulties, in separating the leached solids from the liquid. In addition, after separation of the leached solid, the leach liquor containing the soluble metal salts has such a high concentration of acid as to present technical difficulties and poor economics for the recovery of the valuable metals from this solution. This particularly applies to uraniferous silico-aluminous materials in which the amount of uranium in the leach solution is of such a low concentration that a solid or liquid ion exchange process is required to extract the uranium. If a high concentration of acid is present this will inhibit the extraction of uranium by the solid or liquid ion exchanger.

### TABLE I

EFFECT OF ACID CONCENTRATION ON THE LEACHING ON URANIUM BEARING SILICO-AUMINOUS ORE AT 2:1 LIQUID/SOLID RATIO

| Initial $H_2SO_4$ Concentration g/l | Terminal $H_2SO_4$ Concentration g/l | Metal Dissolved | |
|---|---|---|---|
| | | Uranium % | Aluminium % |
| 684 | 409,5 | 91,1 | 89,7 |
| 514 | 262,6 | 86,8 | 81,5 |
| 358 | 159,7 | 79,0 | 74,5 |
| 200 | 36,2 | 65,5 | 63,4 |

A further difficulty is that the concentrated acid leach will also extract undesirable metals, such as iron from the silico-aluminous material and which, if not removed from the leach liquor, will contaminate the aluminium salt recovered and subsequently the alumina that is obtained on calcining the aluminium salt. The high acidity and the presence of any metal sulphates in solution will also present difficulties for the removal of the metals.

3

The Applicants have now provided a process which reduces the problems of the prior art referred to above.

The present invention provides a process for recovering uranium and/or aluminium from a refractory silico-aluminous material, which comprises leaching the silico-aluminous material in one or more stages, obtaining a pregnant solution which contains little or no acid that would inhibit the recovery of uranium and/or aluminium from the leach solution, and thereafter recovering the desired materials from the solution.

The refractory silico-aluminous material may be obtained by roasting coal. The coal contains aluminium and uranium and can be roasted at a temperature in the region of about 400-800°C. If it is desired to extract carbonaceous liquid materials from the coal, lower temperatures in the range of about 400-550°C can be used, whereas temperatures in the range of about 500-800°C can be used if the recovery of liquid carbonaceous material is not important.

The ash obtained can be subjected to a leach containing strong acid, e.g. sulphuric, hydrochloric or the like acid, at elevated temperatures up to about 130°C. Conveniently, the temperatures used may be in the region of about 85-120°C.

After the first leach, the solution may be filtered and the residue subjected to a second leach using concentrated acid. The second leach may be carried out in the same temperature range. It appears preferable for the temperature of the second leach to be slightly higher than the temperature of the first leach, by about 10-30°C. Thus, the first leach may, for example, be carried out at about 90°C and the second leach at about 115°C.

After the second leach stage, the liquid and solid may be separated from each other. The solid residue may be passed to a waste dump. The separation conveniently is carried out in a plurality of settlers followed by filtration. The filter cake may be washed with water and the water circulated back to the settlers. The solution from the settlers may be allowed to overflow and recycle back to the first stage leach. By doing that, the acid which is recycled is weaker than the concentrated acid which is submitted to the second stage leach. This solution which is recycled contains the desired metals, namely aluminium and uranium, as well as very little or no free acid. The pH is in the range 1,5 to 2, preferably about 1,7. The maximum amount of free acid is about 5 grams per liter, more conveniently about 2 grams per liter.

The pregnant solution from the first stage leach is thereafter submitted to recovery of the uranium, e.g. by means of ion exchange or other known process for obtaining uranium from a solution.

Conveniently, the solution obtained after recovery of uranium, can be submitted to an aluminium recovery step. If the solution contains iron, as is usually the case, it is necessary to remove the iron before recovering the aluminium.

0071679

The iron will be in the ferrous state and can be removed by bacterial oxidation. A very convenient process is the commercially available process for oxidising the iron by passing it through a honeycomb-like structure containing tortuous passages submerged within sulphuric acid, the walls of the passages being coated with a bacterial oxidising agent, and the passages being wide enough to permit the ions of the solution to pass through.

The ferric sulphate obtained can be removed by conventional solid or liquid ion exchange procedures. Thereafter, the aluminium can be recovered from the solution.

The invention is illustrated in non-limiting manner by reference to the accompanying drawings, in which

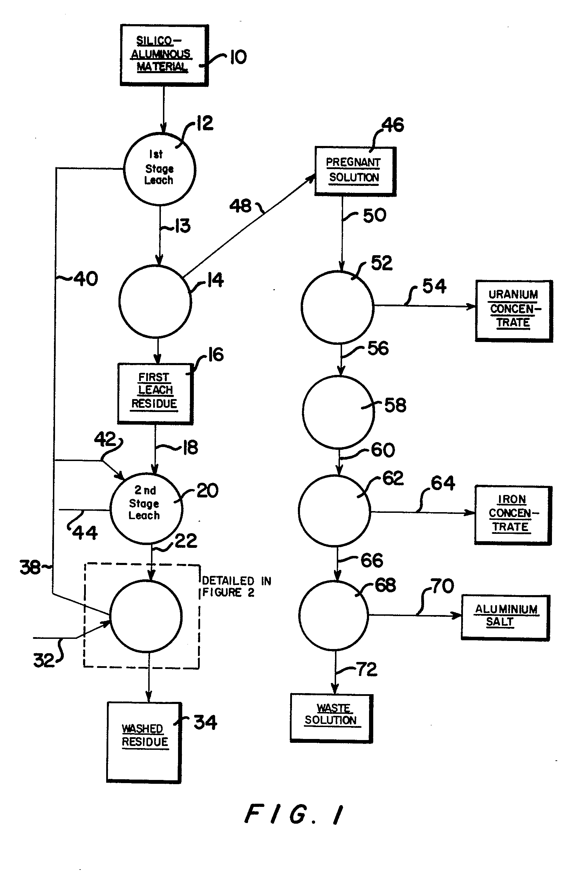

Figure 1 is a flow sheet showing the overall process of the invention; and

Figure 2 is a flow sheet showing, in greater detail, the part of the first flow sheet which is shown in broken lines.

In these Figures, a silico-aluminous material 10 is passed to a first leach stage 12 where leaching takes place at about 90°C with strong acid. The slurry was filtered at 14 and the filter cake forming the first leach residue 16 was passed along line 18 to a second leach stage 20 where leaching with strong acid was carried out at about 115°C. The slurry from the second leach stage was passed along line 22 to a pair of settlers 24, 26. The settled material passing along line 28 was filtered at 30 and washed with water through pipe 32. The washed residue 34 was disposed of.

The filtrate from the filter 30 was passed back along line 36 to the second settler 26. The overflow from the second settler 26 was recirculated back to the first settler 24 along line 37. The overflow from the first settler 24 was recirculated back to the first and second leaching stages along lines 38, 40 and 42. Fresh concentrated acid is introduced into the second leach stage 20 along line 44.

The liquid phase from the first leach stage 12 is a pregnant solution which is passed along lines 48, 50 to a uranium recovery stage 52. The uranium is extracted by an ion exchanger to give a uranium concentrate in line 54.

The uranium barren effluent passes along line 56 to an oxidation stage 58 where iron present is oxidised. The solution containing ferric iron passes along line 60 to an iron recovery stage 62. The iron solution 64 obtained is passed to an iron concentrate step 64.

The raffinate from the iron recovery step 62 passes along line 66 to an aluminium recovery step 68 and crystalline aluminium salts are removed at 70. The waste solution from the aluminium recovery stage 68 passes along line 72 to waste.

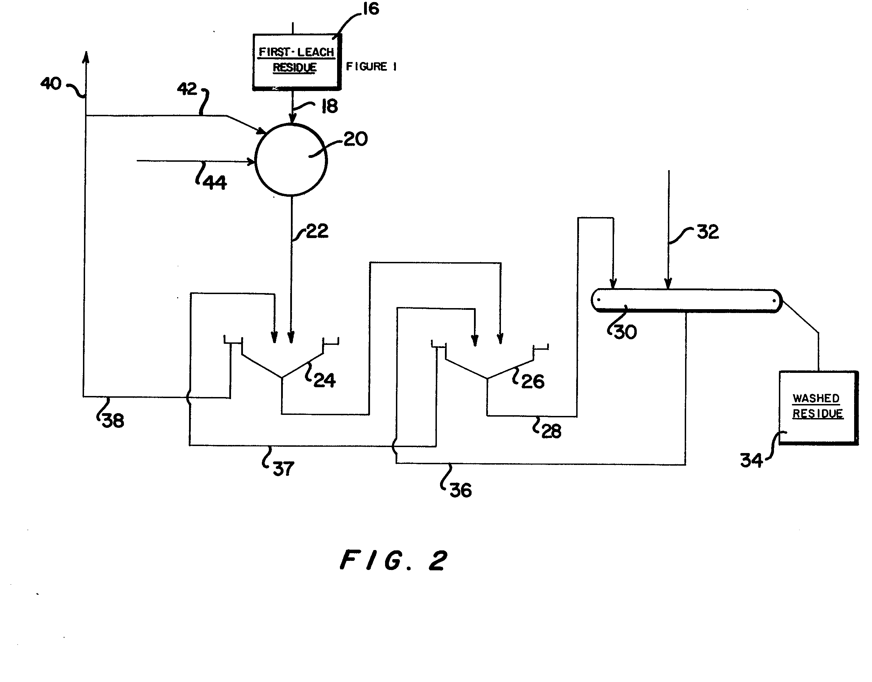

Referring now in more detail to Figure 2, a comparatively low acid filtrate in line 36 is obtained after the second stage leach. A portion of this filtrate is passed through lines 38 and 40 to hot leach the first stage. This extracts a portion of the metals present with the silico-aluminous material

0071679

consuming most of the acid. At the same time, any potassium and ferric iron present will form potassium Jarosite which, as a resultant low acid slurry, passes along line 13 to the filter stage 14. It is easy to filter, and the filtrate or pregnant solution passing along line 48 with all the metals, has so little free acid that it is amenable to ion exchange processing.

In the second stage leach, strong acid along line 29, with some solution from a previous second stage leach and passing along line 42, is then added to the partially leached first stage (unwashed) filter cake. The acid concentration is not so high as to dissolve the Jarosite present. This solubilises about 80 to 90% of the metals present. The leached high acid slurry passing along line 22 is subjected to a liquid/solid separation procedure in the settlers 24 and 26. The solubility of the salts of the leached-out metals in the solution should not be exceeded. This is to prevent crystallization that would otherwise hinder subsequent processing. As the acid concentration of the leach liquor in the second stage leach 20 is high, and will be highly corrosive, the liquid/solid separation conveniently is accomplished by a counter-current operation in which dilution of the acid is achieved by the filtrate and water wash of the following filtration step passing along lines 36 and 37. The water wash using water through pipe 32 also ensures maximum removal of entrained salts. The washed residue 34 is discarded.

The filtrate and washings passing alone line 40 are used in the next first stage leach of fresh ore. The conditions conveniently are so arranged as to give a pregnant solution 46 that has an acidity of pH 1,7 or higher. The uranium in the pregnant solution is extracted using a solid or liquid ion exchanger to give a uranium concentrate passing along line 54. The uranium barren effluent passing along line 56 will invariably contain iron in the ferrous state which, if not removed, contaminates the final aluminium product.

Removal of iron can be best achieved with it in the ferric state. Oxidation of the ferrous ion conveniently is achieved in the oxidation stage 58 by a non-polluting chemical reagent, eg hydrogen peroxide. The solution passing along line 60 is conveniently treated with a solid or liquid ion exchanger to remove the iron. With a sulphuric acid leach and a low acid effluent in line 56, a bacterial oxidation of the ferrous iron can be carried out as given by the inexpensive BACFOX process (S.A. Patent No. 76/6191). The raffinate in line 66 is evaporated to crystallise out the aluminium sulphate in stage 68, and calcined to alumina.

The invention is illustrated by reference to the following non-limiting Examples. In Example 1, a two-stage sulphuric acid weak/strong acid leach is effected over 15 leach tests with recycle of strong acid liquor from the second stage leach to the next first stage leach. The ash used as starting material was derived from a coal roasted at about 700°C under oxidising conditions. Sulphuric acid is used as the leach reagent for this Example. In this Example, only filtration is used for the second stage liquid/solid separation and not a decant-filtration.

EXAMPLE 1

1500 grams of ash were divided into 12 equal portions of 125 grams each. To commence the test, 270 ml of 147 g/l sulphuric acid (to simulate a solution from a previous leach) were used to leach the first 125 grams sample of ash at 90°C for 6 hours. The slurry was filtered and the uranium-aluminous bearing filtrate (now pregnant solution) which contains very little or no free acid, was sent for recovery of uranium and removal of iron. (Details are given in Example 4).

The partially leached unwashed wet filter cake was repulped with 100 ml water to which 79,7 grams of concentrated acid were added to bring the acid concentration for the second stage equivalent to 586 g of $H_2SO_4$/litre. The slurry was heated to 115°C for 6 hours, with stirring. Water was added to the leached slurry. This diluted the liquid phase to prevent crystallization of aluminium sulphate. The slurry was filtered at a temperature a few degrees above ambient temperatures. The cake was given a displacement water wash to remove entrained salts. This filtrate and washings were split into two portions. A portion was used to leach the next 125 grams sample, and the other portion, plus concentrated $H_2SO_4$, to repulp it after the first stage leach. (This was effected in place of the 100 ml of water used in the first cycle).

This cycle was repeated until all the 12 samples had been leached. Metal dissolution results in the 12 leaches are given in Table II. From this leach only two products are produced, namely a leached solid and the pregnant solution containing the metals.

TABLE II    RESULTS OF 12 CONSECUTIVE TWO STAGE LEACHES OF ASH

125 gram of ash taken for each test containing 1,3 kg $U_3O_8$/ton, 17,4% Al, 3,0 Fe.

| Test No. | First Stage Leach | | Second Stage Leach | | Metals Dissolved % | | |
|---|---|---|---|---|---|---|---|
| | Initial $H_2SO_4$ g/ℓ | Pregnant $H_2SO_4$ g/ℓ | Initial $H_2SO_4$ g/ℓ | Filtrate + Wash $H_2SO_4$ g/ℓ | U | Al | Fe |
| 1 | 147 | Nil | 586 | 126 | 89,3 | 81,9 | 88,1 |
| 2 | 126 | " | 591 | 115 | 87,4 | 79,9 | 84,8 |
| 3 | 115 | " | 589 | 118 | 87,4 | 74,9 | 67,5 |
| 4 | 118 | " | 601 | 112 | 83,6 | 76,2 | 79,9 |
| 5 | 112 | " | 657 | 156 | 89,3 | 80,6 | 79,7 |
| 6 | 156 | " | 836 | 98 | 88,7 | 79,9 | 78,3 |
| 7 | 98 | Nil | 534 | 96 | 85,5 | 72,5 | 76,4 |
| 8 | 96 | " | 551 | 109 | 87,4 | 76,4 | 68,3 |
| 9 | 109 | 2,2 | 571 | 122 | 88,7 | 77,6 | 67,2 |
| 10 | 122 | 8,6 | 588 | 132 | 88,1 | 75,7 | 53,9 |
| 11 | 132 | 4,8 | 557 | 125 | 88,1 | 76,2 | 72,9 |
| 12 | 125 | 1,0 | 534 | 114 | 88,1 | 76,0 | 44,2 |
| Mean | 121,3 | 1,4 | 599,8 | 118,6 | 87,6 | 77,3 | 71,8 |

Table III below shows that the water wash given to the filter cake reduced the dissolved loss of uranium (the most valuable metal) to a neglible amount. This did not unduly dilute the metal concentrations as is shown by the pregnant solution analysis.

TABLE III    DISSOLVED  LOSS  AND  CONCENTRATION  OF  METALS

IN  THE  PREGNANT  SOLUTION

| Test No. | Dissolved Loss % U | Pregnant Solution Analysis - 1st Filtrate | | | | |
|---|---|---|---|---|---|---|
| | | U g/$\ell$ | Al g/$\ell$ | FeII g/$\ell$ | FeIII g/$\ell$ | $H_2SO_4$ g/$\ell$ |
| 1 | 1,9 | 0,395 | 11,2 | 1,5 | 0,1 | Nil |
| 2 | 2,5 | 0,626 | 13,0 | 3,1 | 0,1 | " |
| 3 | 3,1 | 0,591 | 12,0 | 3,9 | 0,1 | " |
| 4 | 7,5 | 0,707 | 27,2 | 4,4 | 0,3 | " |
| 5 | 7,5 | 0,638 | 26,7 | 5,0 | Nil | " |
| 6 | 6,9 | 0,716 | 16,7 | 4,9 | 0,3 | " |
| 7 | 1,9 | 0,603 | 22,2 | 4,9 | 0,1 | " |
| 8 | 2,5 | 0,618 | 21,8 | 4,8 | 0,4 | " |
| 9 | 5,0 | 0,615 | 25,6 | 4,6 | 0,5 | 2,2 |
| 10 | 7,5 | 0,631 | 21,7 | 4,9 | 0,6 | 8,6 |
| 11 | 6,9 | 0,569 | 22,3 | 4,5 | 0,6 | 4,8 |
| 12 | 11,9 | 0,632 | 22,4 | 4,9 | 0,2 | 1,0 |
| Mean | 5,4 | 0,612 | 20,2 | 4,3 | 0,3 | 1,4 |

EXAMPLE 2

In this Example, another silico-aluminous ash which had been roasted at 670°C, and which had lower acid-consuming properties, was used.

The procedure was similar to Example 1 except that a larger amount of sample was taken for each leach and that a counter-current/filtration procedure was used for the liquid/solid separation of the second stage leached slurry (ie as illustrated in Figure 2).

222,6 kilograms of ash were divided into 21 equal portions of 10,6 kilograms each. To commence the test, 23 litres

0071679

of 138 g/l sulphuric acid were used to leach the first 10,6 kilogram of sample at 90°C for 6 hours. The slurry was filtered and the uranium-aluminium bearing pregnant solution, which contained little or no free acid, was sent for uranium recovery and removal of iron. The partially leached unwashed wet filter cake was repulped with 8,5 litres of water to which were added 6,0 kilograms of concentrated sulphuric acid to bring the acid concentration to 419 gram/l. The slurry was heated to 115°C for 6 hours. The filtrate washings were added to the leached slurry to prevent crystallization of the aluminium sulphate. The solids were allowed to settle and the solution decanted off. This was repeated once more and then the settled solids were filtered and given a water wash. The filtrate plus washings were then used for a two-stage, counter-current wash and leach of the following 10,6 kilogram sample (in accordance with Figure 2)..

The cycle was repeated until all 21 samples had been leached. Mean metal dissolutions in the 21 cycles are given in Table IV. Table V gives the mean dissolved loss and pregnant solution metal concentrations for the 21 leaches.

TABLE IV    MEAN  RESULTS  OF  21  CONSECUTIVE  LEACHES
OF  SILICO-ALUMINOUS  MATERIAL

| No. of Leaches | 1st Stage Leach | | 2nd Stage Leach | | Metal Dissolved % | | |
| | Initial $H_2SO_4$ g/$\ell$ | Pregnant $H_2SO_4$ g/$\ell$ | Initial $H_2SO_4$ g/$\ell$ | Filtrate + Wash $H_2SO_4$ g/$\ell$ | U | Al | Fe |
|---|---|---|---|---|---|---|---|
| 21 | 96,2 | 4,2 | 362,4 | 93,7 | 86,7 | 81,3 | 86,9 |

TABLE V    MEAN URANIUM DISSOLVED LOSS AND PREGNANT SOLUTION METAL CONCENTRATIONS

| No. of Leaches | Dissolved Loss U % | Pregnant Solution Analysis (1st Filtrate) | | | | |
|---|---|---|---|---|---|---|
| | | U g/$\ell$ | Al g/$\ell$ | FeII g/$\ell$ | FeIII g/$\ell$ | $H_2SO_4$ g/$\ell$ |
| 21 | 0,5 | 0,448 | 24,8 | 4,6 | 0,4 | 0,4 |

The extraction of uranium from a pregnant acidic iron salt solution by a solid or liquid ion-exchange is well known and practised world-wide. With the present invention, a dilute uranium solution containing a high concentration of aluminium sulphate is provided. This solution is amenable to treatment with a solid or liquid ion exchanger to recover the uranium. Example 3 below demonstrates that uranium can be extracted from such a solution.

EXAMPLE 3

A solution containing 0,464 g/l $U_3O_8$ and 162 g/l $al_2SO_4$ at a pH of 2,0 was passed through a series of four laboratory mixer-settlers at a flow rate of 240 ml/min. in counter-current to a flow of 110 ml/minute of 5% ALAMINE 336 (an anion exchanger) in kerosene. The mixer settler area was 0,0067 $m^2$.

The loaded organic kerosene solution was in turn passed through a further four mixer settlers at a rate of 110 ml/minute in counter-current to 55 ml:minute of 15% ammonia sulphate, maintained at pH 4,5 with ammonia, to strip the solvent off the loaded uranium. Results are given in Table VI.

TABLE VI      EXTRACTION OF URANIUM FROM ALUMINIUM SULPHATE SOLUTION

| Feed Solution g/$\ell$ | | Raffinate g/$\ell$ | | $(NH_4)SO_4$ Strip Liquor |
| --- | --- | --- | --- | --- |
| $U_3O_8$ | $Al_2SO_4$ | $U_3O_8$ | $Al_2O_3$ | $U_3O_8$ g/$\ell$ |
| 0,464 | 162,0 | 0,003 | 162,0 | 2,34 |

Removal of iron from the raffinate solution was accomplished by first oxidising the ferrous iron with a <u>Thiobacillus ferro-oxidans</u> bateria culture to the ferric state and then extracting the ferric ion with a suitable solvent.

The rate of oxidation of ferrous iron was at a reasonable fast rate for suitable application of the BACFOX process. To assess this, the oxidation rate was compared to a control using a solution that was known to be suitable for oxidation by a BACFOX unit. Details are given in Example 4.

EXAMPLE 4

100 ml aluminium-ferrous iron solution containing 26 g/l Al and 5 g/l FeII at pH 1,8, were inoculated with 10 ml of a bacteria solution containing <u>Th.ferro-oxidans</u> and 5 gram/l ferric sulphate. A solution containing 4,9 g/l FeII and suitable nutrients but no aluminium was also inoculated with 10 ml of bacteria solution as the control. Both solutions were aerated with a fine stream of bubbles. Each day a small aliquot of each solution was removed for ferric iron assay. The test was carried out at a temperature of $34^{\circ}C$. The rate of oxidation of the ferrous iron to ferric in both solutions is given in Table VI.

0071679

### TABLE VI    RATE OF OXIDATION OF FERROUS IRON BY TH.FERRO-OXIDANS

|  | Al g/$\ell$ | FeII g/$\ell$ | FeIII g/$\ell$ | $H_2SO_4$ g/$\ell$ |
|---|---|---|---|---|
| Assay Aluminium Soln | 27,0 | 4,0 | 0,2 | 0,3 |
| Assay Control | Nil | 5,0 | 1,0 | 2,3 |

| No. of Days | Aluminium Solution % FeII Oxidised to FeIII | Control Solution % FeII Oxidised to FeIII |
|---|---|---|
| 0 | 0 | 0 |
| 1 | 7,0 | 0 |
| 2 | 24,7 | 1,8 |
| 3 | 44,0 | 7,1 |
| 4 | Not done | 8,9 |
| 5 | 92,0 | 48,2 |
| 6 |  | 98,2 |

The results given in Table VI show that the rate of oxidation of the ferrous iron in the aluminium sulphate solution is faster than that of the control.  This indicates that the same size commercial process can be used for the BACFOX unit that now oxidises the ferrous iron in a solution similar to the control.

Extraction of ferric iron from the aluminium solution was accomplished by solvent extraction using procedures well publicised in literature and technical magazines.  As can be seen, the aluminium can be recovered as an aluminium salt.

16

CLAIMS

1.    A process for recovering uranium and/or aluminium from a refractory silico-aluminous material by leaching the silico-aluminous material (10) in one or more stages (12, 20) to give a leach solution and thereafter recovering the desired metal from the solution, characterised in that the solution is a pregnant solution which contains little or no acid that would inhibit the recovery of uranium and/or aluminium from the leach solution.

2.    A process as claimed in Claim 1, characterised in that the leaching is carried out with a strong acid at a temperature up to 130°C and that the leaching is carried out in two stages (12, 20), with the temperature of the second leach stage (20) being 10 to 30°C above that of the first leach stage (12).

3.    A process as claimed in Claim 2, characterised in that liquid and solid from the second stage (20) are passed to settlers (24, 26), and the liquid phase from the settlers is circulated back to the first leach stage (12).

4.    A process as claimed in any of Claims 1 to 3, characterised in that the uranium is recovered by an ion exchange process.

5.    A process as claimed in any of Claims 1 to 4, characterised in that iron present is removed from the solution by oxidation to ferric iron and removal of the ferric iron.

0071679

6.      A process as claimed in Claim 5, characterised in that bacterial oxidation of ferrous ion is carried out.

7.      A process as claimed in any of Claims 1 to 6, characterised in that aluminium is removed as crystals of an aluminium salt.

F I G. I

16

FIRST · LEACH
RESIDUE          FIGURE I

18

42

40

44

20

22

32

30

24

26

28

38

37

36

WASHED
RESIDUE

34

FIG. 2

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | INDUSTRIAL AND ENGINEERING CHEMISTRY, vol.50, no.12, December 1958, pages 1750-1753 NEW YORK (US) F.Z. POLLARA et al.: "Recovery of Uranium from Chattanooga Shale" | | C 22 B 60/02 C 22 B 21/00 |
| A | FR - A - 2 316 344 (BOLIDEN A.G.) | | |
| A | US - A - 2 894 809 (R.F. McCULLOUGH) | | |
| A | US - A - 3 268 288 (M.B. GOREN) | | **TECHNICAL FIELDS SEARCHED (Int.Cl. ³)** |
| A | GB - A - 2 001 611 (SHERITT GORDON) | | C 22 B 60/02 C 22 B 21/00 C 22 B 7/00 C 22 B 3/00 |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | |
|---|---|---|
| Place of search The Hague | Date of completion of the search 20-04-1982 | Examiner TORFS |